# EUROPEAN PATENT SPECIFICATION

(11) **EP 0 906 861 B1**
(45) Date of publication and mention of the grant of the patent: **24.09.2003**
(21) Application number: 97925819.1
(22) Date of filing: 11.06.1997
(51) Int. Cl.: B62B 7/12

(54) **CHILDREN'S CYCLE**
KINDERFAHRZEUG
CYCLE POUR ENFANT

(30) Priority: 11.06.1996 CN 96230036; 22.04.1997 CN 97106399
(43) Date of publication of application: 07.04.1999
(73) Proprietor: Goodbaby Group Corp., Kunshan City, Jiangsu 215331 (CN)
(72) Inventor: SONG, Zhenghuan, Kunshan City, Jiangsu 215000 (CN)
(74) Representative: Siniscalco, Fabio
(86) International application number: PCT/CN97/00059
(87) International publication number: WO 97/047506

(56) References cited:
- CN-U- 2 051 607
- CN-U- 2 069 821
- US-A- 3 485 507

## Description

Generally, a children's tricycle ( or a children's bicycle). comprises frames and wheels. Sometimes the tricycle further includes a push-hand erected at the back of the tricycle, which is used for pushing the tricycle by adults. Usually, a children's tricycle can not be used as a rocker such as a rocking horse.

An object of the present invention is to provide a children's cycle which can be used as a rocker such as a rocking horse, see for example, documents CN-U-2051607.

According to the present invention, a children's cycle is provided which comprises frames, wheels under the frames and two pedals for rotating the wheels. The frames include a front frame and a rear frame which are rotatably connected by a shaft. A front fork is provided under the front portion of the front frame. A front wheel is provided on the front fork A left handlebar and a right handlebar are provided symmetrically on the upper portion of the front frame. A saddle is provided above the middle portion of the rear frame. A left rear wheel and a right rear wheel. are symmetrically provided in each side under the rear portion of the rear frame. An arcuate bottom rack is provided as described in the characterizing part of Claim 1.

The present invention has the following advantages over the prior art:
1) With the arcuate bottom rack bowing downward under the frames, the children's cycle has a function as a rocker;
2) When the present invention is used as a children's cycle, the arcuate bottom rack is moved away from the underside of the frames so that the wheels will touch the ground. If the arcuate bottom rack is moved to the back of the frames, it can be used as a push-hand for pushing the children's cycle by adults.

The above object and features of the present invention will be more clear through reading the detailed description of a preferred embodiment according to the invention with reference to the drawings, in which:
Fig. 1 is a perspective view showing a children's tricycle according to the present invention which can be pushed by hand;
Fig. 2 is a perspective view showing the children's tricycle in which the push-hand is turned downward to the underside of the cycle body so that the tricycle can be used as a rocker.
Fig. 3 is a view showing the locking means which are used to lock the arcuate bottom rack and the rear frame when the arcuate bottom rack is moved to the back of the rear frame so as to be used as a push-hand;
Fig. 4 is a sectional view showing that the front frame is connected to the rear frame by a shaft, and that the front frame and the rear frame are locked by the locking means.
Fig. 5 is view showing an alternative locking means which are used to lock the arcuate bottom rack and the rear frame when the arcuate bottom rack is moved to the back of the rear frame so as to be used as a push-hank;
Fig. 6 is a outside view showing a length of a side bar of the arcuate bottom rack;
Fig. 7 is a sectional view taken along the A-A direction in the Fig. 6.

In the drawings, the reference numeral 1 is an arcuate bottom rack, 2 are transverse bars, 3 is a rear frame, 4 is a front wheel, 5 are rear wheels, 6 is a rear axle, 7 is a spring, 8 is a head of a inserted pin, 9 is an inserted pin, 10 is a saddle, 11 are handlebars, 12 are pedals, 13 is a front fork, 14 is a front frame, 15 is a protection sheath, 16 is an opening, 17 is a spring, 18 is a hook, 19 is a hook pin, 20 is a shaft, 21 is an attaching rope, 22 is an inserted pin, 23 is a storing hole for the inserted pin, 24 is a front axle.

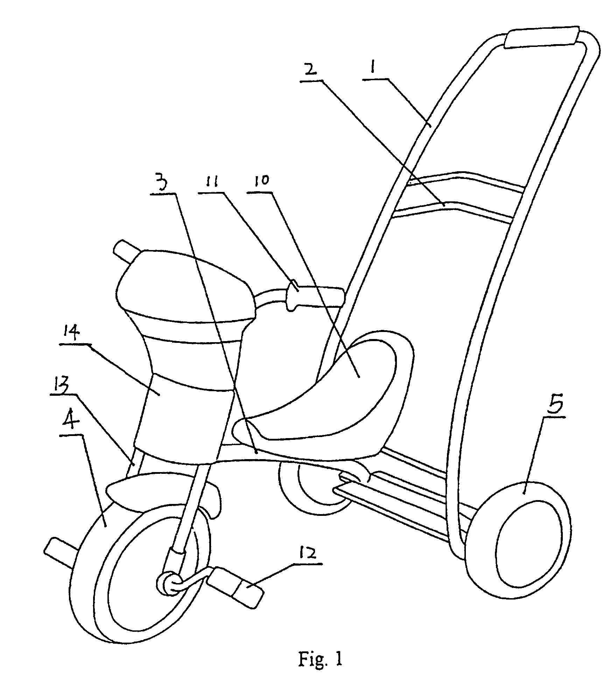

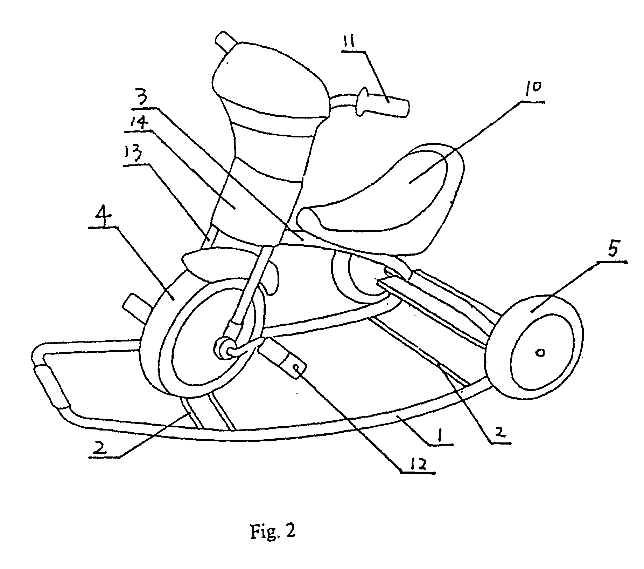

Reference is made to Figs. 1 and 2, in which a children's cycle according to the present invention comprises front and rear frames 3 and 14, front wheels 4 and 5 mounted under the frames, and a pair of pedals 12 for rotating the wheels. The pedals 12 may be connected to the front axle 24 of the front wheel 4 by a crank (when the frames are those of a tricycle), or may be connected to a chain wheel by a crank while the chain wheel in turn is connected to the rear axle 6 by a chain transmission (when the frames are those of a bicycle). The frames comprise a front frame 14 and a rear frame 3 which are rotatably connected to each other by a shaft 20. A front fork 13 is provided under the front portion of the front frame 14. A front wheel 4 is provided on the front fork 13. A left handlebar and a right handlebar 11 are provided symmetrically on the upper portion of the front frame 14. A saddle 10 is provided above the middle portion of the rear frame 3. A left rear wheel and a right rear wheel 5 are provided symmetrically under the rear portion of the rear frame 3. The structure as above-described is a common structure in a children's tricycle or in a children's bicycle.

The features of the present invention are as follows:

An arcuate bottom rack 1 is provided under the frames. The rack 1 contacts the ground so as to support the cycle body composed of the frames and the wheels, and the children's cycle can be used as a rocker. When the arcuate bottom rack 1 is moved away from the underside of the cycle body, the cycle body is supported by the wheels and the cycle functions as a tricycle or a bicycle.

As shown in Fig. 1, the arcuate bottom rack 1 is movably connected to the lower rear portion of the rear frame 3. After the arcuate bottom rack 1 is moved to the back of the rear frame 3 and is erected upright there, the arcuate bottom rack 1 may be used as a push-hand for pushing the cycle. The latter is a preferred structural design. The rear portion of the arcuate bottom rack 1 is articulately connected to the rear portion of the rear frame 3 such that the arcuate bottom rack 1 may be rotated around the position where it is articulately connected with the rear frame 3, so as to obtain different functional positions.

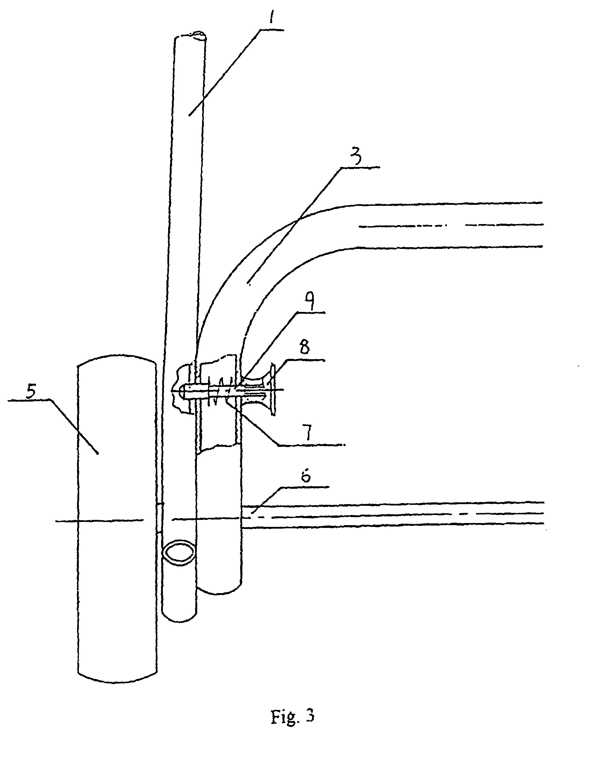

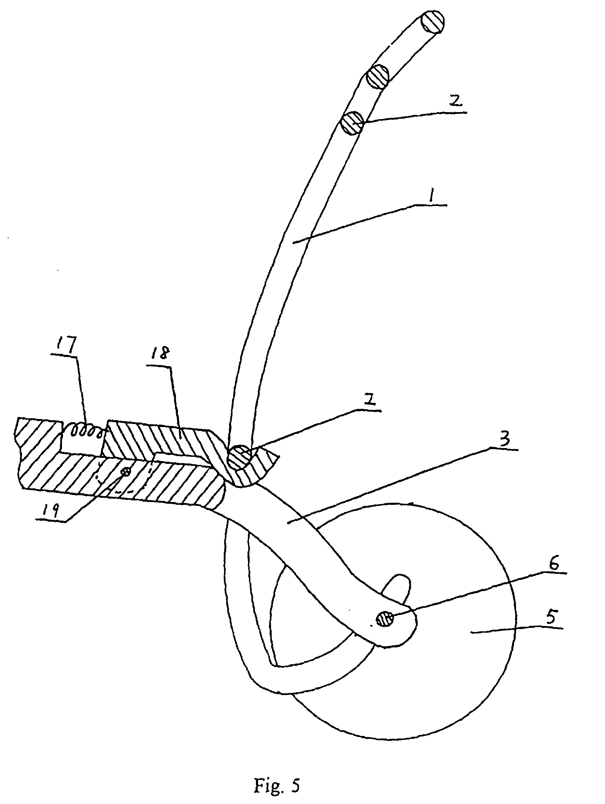

Locking means are provided which, when the arcuate bottom rack 1 is erected at the back of the rear frame 3, locks together the rear frames 3 and the arcuate bottom rack 1. A kind of the locking means is shown in Fig. 3 in which an inserted pin 9 with a head 8 is provided in the rear frame 3. The inserted pin 9 is inserted in a hole formed in the arcuate bottom rack 1 and is slidable in the left-and-right direction. Another kind of the locking means is shown in Fig. 5 in which a hook 18 is movably connected on the rear frame 3. The hook 18 catches at the transverse bars 2 of the arcuate bottom rack 1. Other kinds of the locking means are also applicable.

The arcuate bottom rack 1 includes two arcuate side bars bowing downward and transverse bars connecting the side bars. When the arcuate bottom rack 1 is moved to the underside of the cycle body, the front wheel 4 rests on the transverse bars 2 (see Fig. 2). The rear portion of the arcuate bottom rack 1 is articulately connected to the rear axle 6 of the rear wheels 5. The front portion of the arcuate bottom rack 1 is used to support the front portion of the frames or to support the front wheel 4. The rear portion of the arcuate bottom rack 1 is used to support the rear wheels 5 or to support the rear portion of the frames.

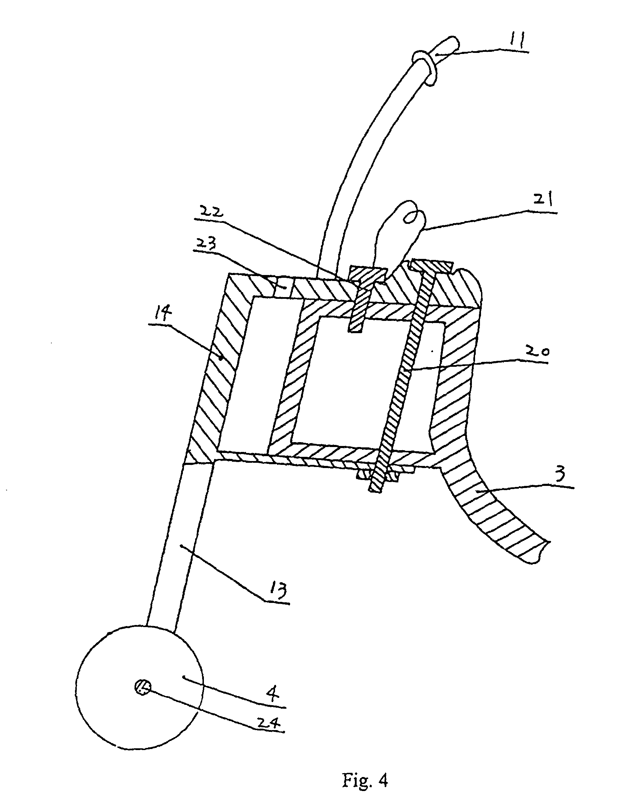

Reference is made Fig. 4. When the cycle is used as a rocker, the relative rotation between the front frame 14 and the rear frame 3 shall be prevented so as to keep the child in safety when he rides on it. For this purpose, locking means are provided between the front frame 14 and rear frame 3 so as to prevent the relative rotation of the front frame 14 and the rear frame 3. The arrangement of the locking means is as follows: an insertion hole is formed in the front frame 14, and a corresponding insertion hole is also formed in the back frame 3 which is aligned with the former hole. A rotation-preventing inserted pin 22 is inserted in the insertion holes formed in the front frame 14 and the rear frame 3. The inserted pin 22 is attached to the front frame 14 by an attaching rope 21. A storing hole 23 for the inserted pin is formed in the front frame 14. When the front frame 14 is not locked with the rear frame 3, the inserted pin 22 is kept in the storing hole 23. Of course, other kinds of the locking means are conceivable.

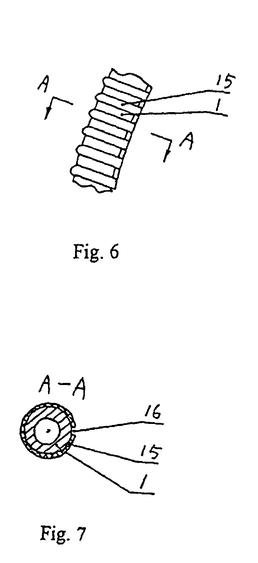

Reference is made to Figs. 6 and 7, in which a protection sheath 15 is provided on the arcuate bottom rack 1 so as to prevent the arcuate bottom rack 1 from being worn out. There is an opening 16 formed on the sheath 15 which is open longitudinally for replacing the sheath 15. Spaced ribs are formed on the sheath 15 and extend peripherally so as to decrease the amount of the materials of which the sheath 15 is made.

The arcuate bottom rack 1 is U-shaped and the ends of its opening are articulately connected with the rear portion of the rear frame 3, respectively. the opening of the arcuate bottom rack 1 becomes gradually wider backward so as to obtain a better stability of the arcuate bottom rack 1 and therefore the child will not turn over sidewards when he rides on the cycle. The ends of the opening of the arcuate bottom rack 1 are articulately connected to the rear axle 6 at the inner sides of the rear wheels 5, respectively. The ends of the opening of the arcuate bottom rack 1 extend backward under the axle 6, and they go beyond the rear axle 6 ( so that the arcuate bottom rack 1 may be extended and the curvature of the rack 1 may be decreased for the sake of safety), and then bend upward and forward so as to form a curve section. The ends of this curve section is articulately connected with the rear axle 6.

In the present invention, when the arcuate bottom rack 1 is erected at the back of the rear frame 3, it may stand upright or slant.

The frames shown in Figs. 1 and 2 are those of a tricycle, but it is understand that the present invention is also applicable to a children's bicycle. In a children's bicycle, there are usually a pair of small rear wheels on both sides of a single large wheel. These small rear wheels are used for preventing the bicycle from turning over sidewards. When the bicycle is used as a rocker, the small rear wheels will rest on the arcuate bottom rack 1 just in the same way as the rear wheels of a tricycle do.

## Claims

1. A children's cycle, comprising frames, wheels under the frames and two pedals for rotating the wheels, said frames including a front frame (14), and a rear frame (3) which are rotatably connected by a shaft; a front fork being provided under the front portion of said front frame (14), a front wheel (4) being provided on said front fork (13), and a left handlebar and a right handlebar (11) being provided symmetrically on the upper portion of said front frame (14); a saddle (10) being provided above the middle portion of said rear frame (3), and a left rear wheel and a right rear wheel (5) being symmetrically provided in each side under the rear portion of said rear frame (3); **characterized in that**: an arcuate bottom rack (1) bowing downward is articulately connected to the rear portion of the rear frame (3) and may rotate from a first functionnal position in which the arcuate rack (1) is under the frames (14, 3), contacts the ground and supports the cycle body composed of the frames (14,3) and wheels (4,5), to a second functional position in which the arcuate rack (1) is rotated from the underside of the cycle body such that the cycle body is supported by the wheels.

2. A children's cycle according to Claim 1, wherein the rear portion of said arcuate bottom rack (1) is movably connected with the lower rear portion of said rear frame (3), and wherein said arcuate bottom rack (1) may be used as a push-hand connected with said rear frame (3) after said arcuate bottom rack (1) is moved to the back of said rear frame (3) and erected there.

3. A children's cycle according to Claim 2, further including locking means which are used to lock together said rear frame (3) and said arcuate bottom rack (1) as a push-hand when said arcuate bottom rack (1) is erected at the back of said rear frame (3).

4. A children's cycle according to Claim 3, wherein said locking means is an insertion pin (9) being provided in said rear frame (3) and being slidable in the left-and-right direction, said insertion pin (9) being inserted in a hole formed in said rear frame (3).

5. A children's cycle according to Claim 3, wherein said locking means is a hook which is movably connected with said rear frame (3), said hook (18) catching at said arcuate bottom rack (1).

6. A children's cycle according to Claim 1, wherein said arcuate bottom rack (1) includes two arcuate side bars bowing downward and transverse bars (2) connecting said two side bars, and said front wheel (4) rests on said transverse bars (2) when said arcuate bottom rack (1) is under the cycle body.

7. A children's cycle according to Claim 1, wherein the rear portion of said arcuate bottom rack (1) is articulately connected with an axle (6) of said rear wheels (5).

8. A children's cycle according to Claim 1, wherein the front portion of said arcuate bottom rack (1) is used to support the front portion of the frames or the front wheel (4), the rear portion of said arcuate bottom rack (1) is used to support the rear wheels (5) or the rear portion of the frames.

9. A children's cycle according to Claim 1, wherein locking means provided between said front frame (14) and said rear frame (3) for preventing said front frame (14) and said rear frame (3) from relative rotation.

10. A children's cycle according to Claim 1, wherein said arcuate bottom rack (1) is covered with a protection sheath (15).

11. A children's cycle according to Claim 9, wherein the arrangement of said locking means is as follows: an insertion hole is formed in said front frame (14), and a corresponding insertion hole is formed in said rear frame (3) in alignment with the former insertion hole, and a rotation-preventing inserted pin (22) is inserted in said insertion holes formed in said front frame (14) and rear frame (3).

12. A children's cycle according to Claim 11, wherein said insertion pin (22) is attached on said front frame (14) by an attaching rope (21), and a storing hole (23) for.the inserted pin is formed in said front frame (14).

13. A children's cycle according to Claim 10, wherein an opening is formed longitudinally on said sheath (15).

14. A children's cycle according to Claim 10, wherein spaced ribs are formed on said sheath (15) and extend peripherally.

15. A children's cycle according to Claim 1, wherein said pedals (12) are connected to a front axle (24) of said front wheel (4) by a crank.

16. A children's cycle according to Claim 1, wherein said pedals (12) are connected to a chain wheel by a crank and said chain wheel in turn is connected with a rear axle (6) by a chain transmission.

17. A children's cycle according to Claim 1, wherein said arcuate bottom rack (1) is U-shaped and the ends of its opening are articulately connected with the rear frames respectively.

18. A children's cycle according to Claim 17, wherein said opening of said arcuate bottom rack (1) becomes gradually wider backward, and the ends of said opening of said arcuate bottom rack (1) are articulately connected to the rear axle (6) of said rear wheels (5) respectively.

19. A children's cycle according to Claim 18, wherein the ends of the opening of said arcuate bottom rack (1) extend backward under the rear axle (6) and go beyond said axle (6), then bend upward and forward so as to form a curve section, the ends of said curve section are articulately connected with the rear axle (6).

## Patentansprüche

1. Kinderfahrzeug umfassend Rahmen, Räder unter den Rahmen und zwei Pedale zum Drehen der Räder, wobei die Rahmen einen Vorderrahmen (14) und einen Hinterrahmen (3) umfassen, die drehbar durch eine Welle verbunden sind; wobei eine Vordergabel unter dem Vorderteil des Vorderrahmens (14) vorgesehen ist, wobei ein Vorderrad (4) auf der Vordergabel (13) vorgesehen ist und wobei eine linke Lenkstange und eine rechte Lenkstange (11) symmetrisch auf dem oberen Teil des Vorderrahmens (14) vorgesehen sind; wobei ein Sattel (10) über dem Mittelteil des Hinterrahmens (3) vorgesehen ist und ein linkes Hinterrad und ein rechtes Hinterrad (5) symmetrisch an jeder Seite unter dem Hinterteil des Hinterrahmens (3) vorgesehen sind, **dadurch gekennzeichnet, dass** ein sich nach unten neigendes gewölbtes Untergestell (1) gelenkig mit dem Hinterteil des Hinterrahmens (3) verbunden ist und sich von einer ersten funktionalen Position, in der des gewölbte Gestell (1) unter den Rahmen (14, 3) ist, den Boden berührt und den aus den Rahmen (14, 3) und Rädern (4, 5) gebildeten Fahrzeugkörper trägt, in eine zweite funktionale Position drehen kann, in der das gewölbte Gestell (1) von der Unterseite des Fahrzeugkörpers derart gedreht wird, dass der Fahrzeugkörper von den Rädern getragen wird.

2. Kinderfahrzeug nach Anspruch 1, worin der Hinterteil des gewölbten Untergestells (1) beweglich mit dem unteren Hinterteil des Hinterrahmens (3) verbunden ist und worin das gewölbte Untergestell (1) als mit dem Hinterrahmen (3) verbundener Schiebegriff verwendet werden kann, nachdem das gewölbte Untergestell (1) zur Rückseite des Hinterrahmens (3) bewegt und dort aufgebaut ist.

3. Kinderfahrzeug nach Anspruch 2, ferner umfassend Verriegelungsmittel, die verwendet sind, um den Hinterrahmen (3) und das gewölbte Untergestell (1) als Schiebegriff zusammenzuschließen, wenn das gewölbte Untergestell (1) an der Rückseite des Hinterrahmens (3) aufgebaut ist.

4. Kinderfahrzeug nach Anspruch 3, worin das Verriegelungsmittel ein Einsetzstift (9) ist, der im Hinterrahmen (3) vorgesehen ist und in Richtung nach links und rechts verschiebbar ist, wobei der Einsetzstift (9) in eine im Hinterrahmen (3) ausgebildete Bohrung eingesetzt wird.

5. Kinderfahrzeug nach Anspruch 3, worin das Verriegelungsmittel ein Haken ist, der beweglich mit dem Hinterrahmen (3) verbunden ist, wobei der Haken (18) am gewölbten Untergestell (1) eingreift.

6. Kinderfahrzeug nach Anspruch 1, worin das gewölbte Untergestell (1) zwei sich nach unten neigende gewölbte Seitenstangen und die beiden Seitenstangen verbindende Querstangen (2) aufweist, und das Vorderrad (4) auf den Querstangen (2) ruht, wenn das gewölbte Untergestell (1) sich unter dem Fahrzeugkörper befindet.

7. Kinderfahrzeug nach Anspruch 1, worin der Hinterteil des gewölbten Untergestells (1) mit einer Achse (6) der Hinterräder (5) gelenkig verbunden ist.

8. Kinderfahrzeug nach Anspruch 1, worin der Vorderteil des gewölbten Untergestells (1) verwendet ist, um den Vorderteil der Rahmen oder das Vorderrad (4) zu tragen, der Hinterteil des gewölbten Untergestells (1) verwendet ist, um die Hinterräder (5) oder den Hinterteil der Rahmen zu tragen.

9. Kinderfahrzeug nach Anspruch 1, worin zwischen dem Vorderrahmen (14) und dem Hinterrahmen (3) Verriegelungsmittel vorgesehen sind, zum Verhindern, dass der Vorderrahmen (14) und der Hinterrahmen (3) sich relativ zueinander drehen.

10. Kinderfahrzeug nach Anspruch 1, worin das gewölbte Untergestell (1) mit einem Schutzüberzug (15) bedeckt ist.

11. Kinderfahrzeug nach Anspruch 9, worin die Anordnung der Verriegelungsmittel wie folgt ist: eine Einsetzbohrung ist im Vorderrahmen (14) ausgebildet und eine entsprechende Einsetzbohrung ist im Hinterrahmen (3) fluchtend zur ersteren Einsetzbohrung ausgerichtet ausgebildet, und ein Drehung verhindernder Einsetzstift (22) ist in die im Vorderrahmen (14) und Hinterrahmen (3) ausgebildeten Einsetzbohrungen eingesetzt.

12. Kinderfahrzeug nach Anspruch 11, worin der Einsetzstift (22) am Vorderrahmen (14) durch ein Befestigungsseil (21) angebracht ist, und eine Aufnahmebohrung (23) für den eingesetzten Stift im Vorderrahmen (14) ausgebildet ist.

13. Kinderfahrzeug nach Anspruch 10, worin eine Öffnung längs auf dem Überzug (15) ausgebildet ist.

14. Kinderfahrzeug nach Anspruch 10, worin in einem Abstand angeordnete Rippen auf dem Überzug (15) ausgebildet sind und sich im Umfang erstrecken.

15. Kinderfahrzeug nach Anspruch 1, worin die Pedale (12) mit einer Vorderachse (24) des Vorderrades (4) durch eine Kurbel verbunden sind.

16. Kinderfahrzeug nach Anspruch 1, worin die Pedale (12) mit einem Kettenrad durch eine Kurbel verbunden sind und das Kettenrad wiederum mit einer Hinterachse (6) durch eine Kettentransmission verbunden ist.

17. Kinderfahrzeug nach Anspruch 1, worin das gewölbte Untergestell (1) U-förmig ist und die Enden seiner Öffnung jeweils gelenkig mit den Hinterrahmen verbunden sind.

18. Kinderfahrzeug nach Anspruch 17, worin die Öffnung des gewölbten Untergestells (1) nach hinten graduell breiter wird und die Enden der Öffnung des gewölbten Untergestells (1) mit der Hinterachse (6) der Hinterräder (5) jeweils gelenkig verbunden sind.

19. Kinderfahrzeug nach Anspruch 18, worin die Enden der Öffnung des gewölbten Untergestells (1) sich nach hinten unter die Hinterachse (6) erstrecken und über die Achse (6) hinaus, sich dann nach oben und nach vorn biegen, um eine Kurvensektion zu bilden, die Enden der Kurvensektion gelenkig mit der Hinterachse (6) verbunden sind.

## Revendications

1. Cycle pour enfants, comprenant des cadres, des roues sous les cadres et deux pédales pour faire tourner les roues, lesdits cadres comprenant un cadre avant (14), et un cadre arrière (3) qui sont reliés de manière rotative par un arbre ; une fourche avant étant prévue sous la partie avant dudit cadre avant (14), une roue avant (4) étant prévue sur ladite fourche avant (13), et un guidon gauche et un guidon droit (11) étant placés de manière symétrique sur la partie supérieure dudit cadre avant (14) ; une selle (10) étant prévue sur le dessus de la partie intermédiaire dudit cadre arrière (3), et une roue arrière gauche et une roue arrière droite (5) étant placées de manière symétrique de chaque côté sous la partie arrière dudit cadre arrière (3) ; **caractérisé en ce que** : une crémaillère inférieure recourbée (1) arquée vers le bas est reliée de manière articulée à la partie arrière du cadre arrière (3) et peut pivoter d'une première position de fonctionnement dans laquelle la crémaillère inférieure recourbée (1) se trouve sous les cadres (14, 3), touche le sol et supporte le corps du cycle constitué des cadres (14, 3) et des roues (4, 5), à une seconde position de fonctionnement dans laquelle la crémaillère recourbée (1) est pivotée depuis la partie située sous le corps du cycle de sorte que le corps du cycle soit supporté par les roues.

2. Cycle pour enfants selon la revendication 1, dans lequel la partie arrière de ladite crémaillère inférieure recourbée (1) est reliée de façon mobile à la partie arrière inférieure dudit cadre arrière (3), et dans lequel ladite crémaillère inférieure recourbée (1) peut être utilisée comme une poignée reliée audit cadre arrière (3) une fois ladite crémaillère inférieure recourbée (1) déplacée vers l'arrière dudit cadre arrière (3) et dressée à cet endroit.

3. Cycle pour enfants selon la revendication 2, comprenant en outre des moyens de fixation qui sont utilisés pour fixer ensemble ledit cadre arrière (3) et ladite crémaillère inférieure recourbée (1) comme une poignée lorsque ladite crémaillère inférieure recourbée (1) est dressée à l'arrière dudit cadre arrière (3).

4. Cycle pour enfants selon la revendication 3, dans lequel lesdits moyens de fixation sont une goupille d'insertion (9) fournie dans ledit cadre arrière (3) et pouvant se déplacer de gauche à droite, ladite goupille d'insertion (9) étant insérée dans un trou formé dans ledit cadre arrière (3).

5. Cycle pour enfants selon la revendication 3, dans lequel lesdits moyens de fixation sont un crochet qui est relié de façon mobile audit cadre arrière (3), ledit crochet (18) accrochant ladite crémaillère inférieure recourbée (1).

6. Cycle pour enfants selon la revendication 1, dans lequel ladite crémaillère inférieure recourbée (1) comprend deux barres latérales recourbées arquées vers le bas et des barres transversales (2) reliant lesdites deux barres latérales, et ladite roue avant (4) repose sur lesdites barres transversales (2) lorsque ladite crémaillère inférieure recourbée (1) se trouve sous le corps du cycle.

7. Cycle pour enfants selon la revendication 1, dans lequel la partie arrière de ladite crémaillère inférieure recourbée (1) est reliée de manière articulée à un essieu (6) desdites roues arrière (5).

8. Cycle pour enfants selon la revendication 1, dans lequel la partie avant de ladite crémaillère inférieure recourbée (1) est utilisée pour supporter la partie avant des cadres ou la roue avant (4), et dans lequel la partie arrière de ladite crémaillère inférieure recourbée (1) est utilisée pour supporter les roues arrière (5) ou la partie arrière des cadres.

9. Cycle pour enfants selon la revendication 1, dans lequel des moyens de fixation sont prévus entre ledit cadre avant (14) et ledit cadre arrière (3) pour empêcher toute rotation relative dudit cadre avant (14) et dudit cadre arrière (3).

10. Cycle pour enfants selon la revendication 1, dans lequel ladite crémaillère inférieure recourbée (1) est recouverte d'une gaine de protection (15).

11. Cycle pour enfants selon la revendication 9, dans lequel la configuration desdits moyens de fixation est la suivante : un trou d'insertion est formé dans ledit cadre avant (14), et un trou d'insertion correspondant est formé dans ledit cadre arrière (3) aligné au premier trou d'insertion, et une goupille insérée (22) empêchant la rotation est insérée dans lesdits trous d'insertion formés dans lesdits cadre avant (14) et cadre arrière (3).

12. Cycle pour enfants selon la revendication 11, dans lequel ladite goupille d'insertion (22) est fixée sur ledit cadre avant (14) par un câble de fixation (21), et un trou de stockage (23) pour la goupille insérée est formé dans ledit cadre avant (14).

13. Cycle pour enfants selon la revendication 10, dans lequel une ouverture est formée longitudinalement sur ladite gaine (15).

14. Cycle pour enfants selon la revendication 10, dans lequel des nervures espacées sont formées sur ladite gaine (15) et s'étendent de manière périphérique.

15. Cycle pour enfants selon la revendication 1, dans lequel lesdites pédales (12) sont reliées à un essieu avant (24) de ladite roue avant (4) par une manivelle.

16. Cycle pour enfants selon la revendication 1, dans lequel lesdites pédales (12) sont reliées à un pignon arrière par une manivelle et ledit pignon arrière est à son tour relié à un essieu arrière (6) par une transmission par chaîne.

17. Cycle pour enfants selon la revendication 1, dans lequel ladite crémaillère inférieure recourbée (1) est en forme de U et les extrémités de son ouverture sont reliées de manière articulée aux cadres arrière respectivement.

18. Cycle pour enfants selon la revendication 17, dans lequel ladite ouverture de ladite crémaillère inférieure recourbée (1) s'élargit progressivement vers l'arrière, et les extrémités de ladite ouverture de ladite crémaillère inférieure recourbée (1) sont reliées de manière articulée à l'essieu arrière (6) desdites roues arrière (5) respectivement.

19. Cycle pour enfants selon la revendication 18, dans lequel les extrémités de l'ouverture de ladite crémaillère inférieure recourbée (1) s'étendent vers l'arrière sous l'essieu arrière (6) et vont au delà dudit essieu (6), puis se recourbent vers le haut et vers l'avant pour former une partie courbée, les extrémités de ladite partie courbée sont reliées de manière articulée à l'essieu arrière (6).
